(19) Europäisches Patentamt
European Patent Office
Office européen des brevets

(11) **EP 4 401 456 A1**

(12) **EUROPEAN PATENT APPLICATION**
published in accordance with Art. 153(4) EPC

(43) Date of publication:
**17.07.2024 Bulletin 2024/29**

(51) International Patent Classification (IPC):
**H04W 24/02** (2009.01)    **H04L 1/18** (2023.01)

(21) Application number: **21956429.1**

(86) International application number:
**PCT/CN2021/117814**

(22) Date of filing: **10.09.2021**

(87) International publication number:
**WO 2023/035246 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **ZHU, Yajun
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **CODEBOOK FEEDBACK METHOD, CODEBOOK FEEDBACK APPARATUS, AND STORAGE MEDIUM**

(57)    The present disclosure relates to a codebook feedback method, a codebook feedback apparatus, and a storage medium. A codebook feedback method, applied to a terminal, comprises: sending capability information, the capability information being used to indicate a HARQ codebook configuration capability supported by the terminal when a partial hybrid automatic repeat request (HARQ) disabling mechanism is used; acquiring HARQ codebook configuration information configured by a network device for the terminal on the basis of the capability information; and generating and feeding back a HARQ codebook on the basis of the HARQ codebook configuration information. The present disclosure enables a HARQ codebook generated and fed back by the terminal to match a HARQ codebook configuration capability supported by the terminal.

FIG.4

**Description**

**TECHNICAL FIELD**

The disclosure relates to a field of communication technology, and more particularly to a method and an apparatus for codebook feedback, and a storage medium.

**BACKGROUND**

In the related art, a partial Hybrid Automatic Repeat Request (HARQ) feedback disabled mechanism is introduced to improve the system efficiency. For example, a mechanism of disabling some of the HARQ feedback processes is introduced in a feedback mechanism for non-terrestrial networks (NTN) to improve the system efficiency.

When a HARQ codebook feedback is performed based on a HARQ feedback-disabled mechanism, different terminal manufacturers currently have different opinions. Some manufacturers advocate no enhancement of the HARQ codebook, so that network device may use a HARQ result of the disabled HARQ process fed back by the terminal to understand decoding situations, and thus use more appropriate transmission parameters. Moreover, no enhancement of the HARQ codebook may also simplify the complexity of a user equipment (UE). Some manufacturers advocate enhancement of the HARQ codebook to reduce a size of the HARQ codebook, thus reducing the interference caused by redundant information and unnecessary uplink transmission.

Therefore, providing a method for HARQ codebook feedback suitable for various types of terminals is a problem that needs to be solved.

**SUMMARY**

In order to overcome the problems existing in the related art, the disclosure provides a method and an apparatus for codebook feedback, and a storage medium.

According to a first aspect of embodiments of the disclosure, a method for codebook feedback is provided, which is applied to a terminal. The method includes: sending capability information, in which the capability information indicates a Hybrid Automatic Repeat Request (HARQ) codebook configuration capability supported by the terminal when using a partial HARQ disabled mechanism; obtaining HARQ codebook configuration information configured by a network device for the terminal based on the capability information; and generating and feeding back a HARQ codebook based on the HARQ codebook configuration information.

In an implementation, in response to the capability information indicating that the terminal supports a first codebook configuration mode, the HARQ codebook configuration information includes first HARQ codebook configuration information, and the first HARQ codebook configuration information indicates the terminal to configure the HARQ codebook in the first codebook configuration mode.

In an implementation, in response to the capability information indicating that the terminal supports the first codebook configuration mode, the HARQ codebook configuration information includes second HARQ codebook configuration information, and the second HARQ codebook configuration information is used for configuring the terminal to configure the HARQ codebook in a second codebook configuration mode; the first codebook configuration mode is an enhancement of the second codebook configuration mode.

In an implementation, the HARQ codebook is one of a plurality of types of HARQ codebooks.

In an implementation, sending the capability information includes: sending first capability information, in which the first capability information is information dedicated to indicating the HARQ codebook configuration capability of the terminal for the HARQ codebook.

In an implementation, sending the capability information includes: sending second capability information, in which the second capability information includes information indicating the HARQ codebook configuration capability of the terminal for the HARQ codebook, and other information different from the information indicating the HARQ codebook configuration capability for the HARQ codebook.

In an implementation, the HARQ codebook is a semi-static HARQ codebook.

In an implementation, the method further includes: receiving Downlink Assignment Index (DAI) indication information.

In an implementation, the method further includes: in response to the HARQ codebook configuration information being the first HARQ codebook configuration information, and the first HARQ codebook configuration information indicating that feedback is not performed when a HARQ process scheduling signaling that requires information to be fed back is not received, the terminal still generates and feeds back the HARQ codebook based on the DAI indication information.

According to a second aspect of the embodiments of the disclosure, a method for codebook feedback is provided, which is applied to a network device. The method includes: obtaining capability information of a terminal, in which the capability information indicates a HARQ codebook configuration capability supported by the terminal when using a partial HARQ disabled mechanism; and configuring HARQ codebook configuration information for the terminal based on the capability information.

In an implementation, configuring the HARQ codebook configuration information for the terminal based on the capability information includes: in response to the capability information indicating that the terminal supports a first codebook configuration mode, configuring first HARQ codebook configuration information for the terminal, in which the first HARQ codebook configuration information is used for configuring the terminal to configure a HARQ codebook in the first codebook configuration mode.

In an implementation, configuring the HARQ codebook configuration information for the terminal based on the capability information includes: in response to the capability information indicating that the terminal supports a first codebook in which mode, configuring second HARQ codebook configuration information for the terminal, in which the second HARQ codebook configuration information is used for configuring the terminal to configure a HARQ codebook in a second codebook configuration mode; the first codebook configuration mode is an enhancement of the second codebook configuration mode.

In an implementation, the HARQ codebook is one of a plurality of types of HARQ codebooks.

In an implementation, obtaining the capability information of the terminal includes: obtaining first capability information, in which the first capability information is information dedicated to indicating the HARQ codebook configuration capability of the terminal for the HARQ codebook.

In an implementation, obtaining the capability information of the terminal includes: obtaining second capability information, in which the second capability information includes information indicating the HARQ codebook configuration capability for the HARQ codebook, and other information different from the information indicating the HARQ codebook configuration capability for the HARQ codebook.

In an implementation, the HARQ codebook is a semi-static HARQ codebook.

In an implementation, the method further includes: sending DAI indication information; receiving the HARQ codebook generated and fed back based on the DAI indication information by the terminal after receiving the first HARQ codebook configuration information, in which the first HARQ codebook configuration information indicates that feedback is not performed when a HARQ process scheduling signaling that requires information to be fed back is not received.

According to a third aspect of the embodiments of the disclosure, an apparatus for codebook feedback is provided, including: a sending unit, configured to send capability information, in which the capability information indicates a HARQ codebook configuration capability supported by the terminal when using a partial HARQ disabled mechanism; an obtaining unit, configured to obtain HARQ codebook configuration information configured by a network device for the terminal based on the capability information; and a processing unit, configured to generate and feed back a HARQ codebook based on the HARQ codebook configuration information.

In an implementation, in response to the capability information indicating that the terminal supports a first codebook configuration mode, the HARQ codebook configuration information includes first HARQ codebook configuration information, and the first HARQ codebook configuration information indicates the terminal to configure the HARQ codebook in the first codebook configuration mode.

In an implementation, in response to the capability information indicating that the terminal supports the first codebook configuration mode, the HARQ codebook configuration information includes second HARQ codebook configuration information, and the second HARQ codebook configuration information is used for configuring the terminal to configure the HARQ codebook in a second codebook configuration mode; the first codebook configuration mode is an enhancement of the second codebook configuration mode.

In an implementation, the HARQ codebook is one of a plurality of types of HARQ codebooks.

In an implementation, the sending unit sends first capability information, in which the first capability information is information dedicated to indicating the HARQ codebook configuration capability of the terminal for the HARQ codebook.

In an implementation, the sending unit sends second capability information, in which the second capability information includes information indicating the HARQ codebook configuration capability of the terminal for the HARQ codebook, and other information different from the information indicating the HARQ codebook configuration capability for the HARQ codebook.

In an implementation, the HARQ codebook is a semi-static HARQ codebook.

In an implementation, the obtaining unit is further configured to receive DAI indication information.

In an implementation, in response to the HARQ codebook configuration information being the first HARQ codebook configuration information, and the first HARQ codebook configuration information indicating that feedback is not performed when a HARQ process scheduling signaling that requires information to be fed back is not received, the processing unit still generates and feeds back the HARQ codebook based on the DAI indication information.

According to a fourth aspect of the embodiments of the disclosure, an apparatus for codebook feedback is provided, applied into a network device. The apparatus includes: a obtaining unit, configured to obtain capability information of a terminal, in which the capability information indicates a HARQ codebook configuration capability supported by the terminal when using a partial HARQ disabled mechanism; and a processing unit, configuring HARQ codebook configuration information for the terminal based on the capability information.

In an implementation, in response to the capability information indicating that the terminal supports a first codebook configuration mode, the processing unit configures first HARQ codebook configuration information for the terminal, in which the first HARQ codebook configuration information is used for configuring the terminal to configure a HARQ codebook in the first codebook configuration mode.

In an implementation, in response to the capability information indicating that the terminal supports a first codebook in which mode, the processing unit configures second HARQ codebook configuration information for the terminal, in which the second HARQ codebook configuration information is used for configuring the terminal to configure a HARQ codebook in a second codebook configuration mode; the first codebook configuration mode is an enhancement of the second codebook configuration mode.

In an implementation, the HARQ codebook is one of a plurality of types of HARQ codebooks.

In an implementation, the obtaining unit obtains first capability information, in which the first capability information is information dedicated to indicating the HARQ codebook configuration capability of the terminal for the HARQ codebook.

In an implementation, the obtaining unit obtains second capability information, in which the second capability information includes information indicating the HARQ codebook configuration capability for the HARQ codebook, and other information different from the information indicating the HARQ codebook configuration capability for the HARQ codebook.

In an implementation, the HARQ codebook is a semi-static HARQ codebook.

In an implementation, the apparatus for codebook feedback further includes: a sending unit configured to send DAI indication information; receive the HARQ codebook generated and fed back based on the DAI indication information by the terminal after receiving the first HARQ codebook configuration information, in which the first HARQ codebook configuration information indicates that feedback is not performed when a HARQ process scheduling signaling that requires information to be fed back is not received.

According to a fifth aspect of the embodiments of the disclosure, a device for codebook feedback is provided. The device includes a processor and a memory storing instructions executable by the processor. The processor is configured to perform the method for codebook feedback according to the first aspect or any implementation of the first aspect.

According to a sixth aspect of the embodiments of the disclosure, a device for codebook feedback is provided. The device includes a processor and a memory storing instructions executable by the processor. The processor is configured to perform the method for codebook feedback according to the second aspect or any implementation of the second aspect.

According to a seventh aspect of the embodiments of the disclosure, a storage medium storing instructions is provided. When the instructions are executed by a processor of a terminal, the terminal is caused to execute the method for codebook feedback according to the first aspect or any implementation of the first aspect.

According to an eighth aspect of the embodiments of the disclosure, a storage medium storing instructions is provided. When the instructions are executed by a processor of a terminal, the terminal is caused to execute the method for codebook feedback according to the second aspect or any implementation of the second aspect.

The technical solution according to the embodiments of the disclosure may include the following beneficial effects: the terminal sends capability information indicating HARQ codebook configuration capability supported by the terminal when the HARQ disabling mechanism is used. The network device configures HARQ codebook configuration information for the terminal based on the capability information. The terminal generates and feeds back a HARQ codebook based on the HARQ codebook configuration information, so that the HARQ codebook generated and fed back by the terminal may match the HARQ codebook configuration capability supported by the terminal itself.

It should be understood that the foregoing general description and the following detailed description are exemplary and explanatory only, and do not limit the disclosure.

## BRIEF DESCRIPTION OF THE DRAWINGS

The accompanying drawings, which are incorporated in and constitute a part of this specification, illustrate the embodiments consistent with the disclosure and together with the description, serve to explain the principles of the disclosure.

FIG. 1 is an architecture diagram illustrating a satellite communication system according to an example embodiment of the disclosure.
FIG. 2 is an architecture diagram illustrating a satellite communication system deployed with a base station involved in an example embodiment of the disclosure.

FIG. 3 is an architecture diagram illustrating a satellite communication system deployed with a base station involved in an example embodiment of the disclosure.

FIG. 4 is a flowchart illustrating a method for codebook feedback according to an example embodiment of the disclosure.

FIG. 5 is a flowchart illustrating a method for codebook feedback according to an example embodiment of the disclosure.

FIG. 6 is a flowchart illustrating a method for codebook feedback according to an example embodiment of the disclosure.

FIG. 7 is a flowchart illustrating a method for codebook feedback according to an example embodiment of the disclosure.

FIG. 8 is a flowchart illustrating a method for codebook feedback according to an example embodiment of the disclosure.

FIG. 9 is a block diagram illustrating an apparatus for codebook feedback according to an example embodiment of the disclosure.

FIG. 10 is a block diagram illustrating an apparatus for codebook feedback according to an example embodiment of the disclosure.

FIG. 11 is a block diagram illustrating a device for codebook feedback according to an example embodiment of the disclosure.

FIG. 12 is a block diagram illustrating a device for codebook feedback according to an example embodiment of the disclosure.

## DETAILED DESCRIPTION

The example embodiments will be described in detail herein, examples of which are illustrated in the accompanying drawings. When the following description refers to the drawings, the same numbers in different drawings refer to the same or similar elements unless otherwise indicated. The implementations described in the following example embodiments do not represent all the implementations consistent with the disclosure. Rather, they are merely examples of apparatus and methods consistent with aspects of the disclosure as detailed in the appended claims.

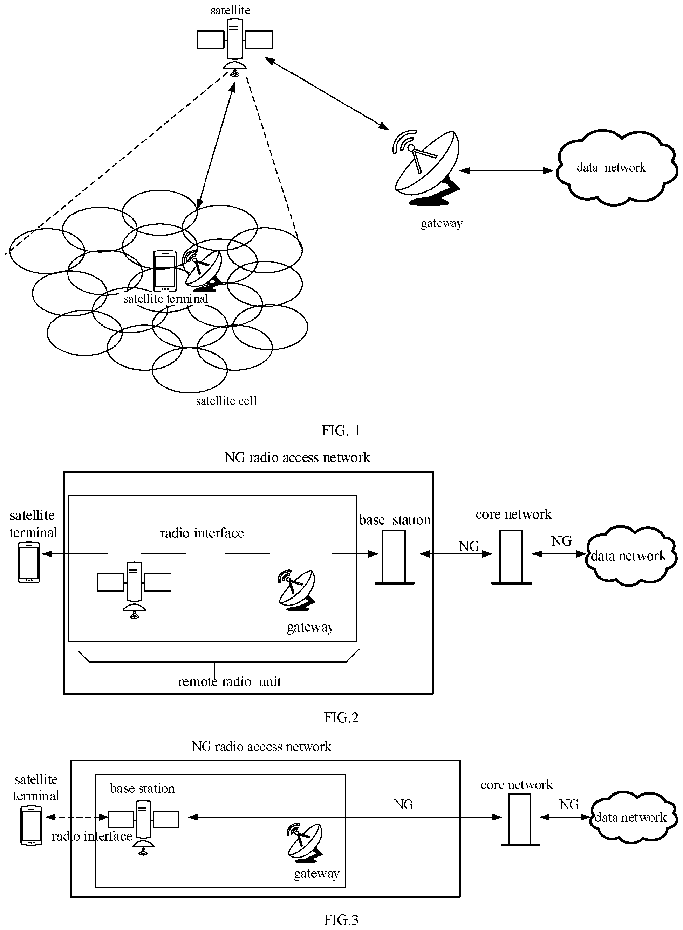

The method for codebook feedback according to the embodiments of the disclosure is applied to non-terrestrial networks (NTN) networks, for example, satellite communication systems or High Altitude Platform Station (HAPS) communication systems. The embodiments of the disclosure are explained by taking a satellite communication system as an example. FIG. 1 is an architecture diagram of a satellite communication system according to an example embodiment. Referring to FIG. 1, a satellite sends a beam via an antenna to form a satellite cell covered by a satellite network. The satellite is in a mobile state. The satellite cell may also be called a beam footprint. The coverage areas between the satellite cells may be nonoverlapping, partially overlapping, or completely overlapping. A satellite terminal may be deployed within the coverage of the satellite network. The satellite terminals located within the coverage of the satellite network communicate through a service link between the satellite cells and satellites. The satellite communicates with ground infrastructure, such as a gateway, through a feeder link, interacts and communicates with ground communication networks, such as a core network and a data network.

The terminal involved in the embodiments of the disclosure may include, but be not limited to: cellular and/or satellite radiotelephones with or without multi-line displays; Personal Communication System (PCS) terminals that may combine radiotelephone and data processing, fax and/or data communications capabilities; Personal Digital Assistants (PDAs) including radio frequency transceivers and pagers, Internet/Intranet access, Web browsers, organizers, calendars, and/or Global Positioning System (GPS) receivers; and/or other devices including radio frequency transceivers. The terminal involved in the embodiment of the disclosure is sometimes called a satellite terminal, a wireless phone or a terminal, and may also be called a terminal device, a User Equipment (UE), a Mobile Station (MS), a Mobile Terminal (MT), etc.

The network device involved in the embodiments of the disclosure may include, but not limited to, wireless base stations, satellite base stations, wireless transceivers, or ground base stations placed on an aircraft that stay at high altitudes for a long time. The network device involved in the embodiments of the disclosure may also be understood as one or more infrastructure units deployed in the satellite communication system. FIG. 2 and FIG. 3 respectively illustrate an architecture diagram of a satellite communication system deployed with a base station involved in an example embodiment of the disclosure. In FIG. 2, the base station (such as gNB in a 5G network) is independent of a satellite and a gateway in a remote radio unit. The satellite terminal is connected to the base station through a radio interface (Uu interface), such as a new radio (NR) Uu interface, and is connected to the core network and data network through a Next Generation (NG) interface for communication. The base station, satellite and gateway may be understood as a NG Radio Access Network (RAN). In FIG. 3, the base station (such as gNB in the 5G network) may be deployed with the satellite, thus forming an NG RAN together with the gateway. The satellite terminal is connected to the base station through the radio interface, and connected to the core network and data network through the NG interface for communication.

In the NTN network, due to too large Round-Trip Time (RTT), the HARQ efficiency is reduced. Therefore, a mechanism of disabling some of the HARQ feedback processes is introduced into the feedback mechanism for the NTN network to improve the system feedback efficiency. In the feedback mechanism of disabling the some of the HARQ feedback processes, relevant terminal manufacturers have different opinions on whether the HARQ codebook that is fed back should be enhanced. HARQ codebooks include Type-1 HARQ codebook, Type-2 HARQ codebook and Type-3 HARQ codebook. Type-1 HARQ codebook is also called a semi-static HARQ codebook. Type-2 HARQ codebook is also called a dynamic codebook, and Type-3 HARQ codebook is also called one-shot codebook. The following description takes the Type-1 HARQ codebook as an example.

For the Type-1 HARQ codebook, some terminal manufacturers advocate not enhancing the Type-1 HARQ codebook. They believes that feeding back by the terminal a HARQ result of the disabled HARQ process may help the network device understand decoding situations and thus use more appropriate transmission parameters. In addition, the complexity of the terminal may be simplified by no enhancement of the codebook. Some terminal manufacturers advocate enhancing the Type-1 HARQ codebook. The main object is to reduce a size of the Type-1 codebook, thus reducing the processing overhead and the interference caused by unnecessary uplink transmission.

In the NTN network, the Type-1 HARQ codebook may be enhanced. The enhancement schemes for enhancing the Type-1 HARQ codebook may include the following schemes:

1. Within a certain feedback window, if a Physical Downlink Shared Channel (PDSCH) received in a possible PDSCH receiving window is scheduled by the feedback-disabled HARQ processes, the terminal may skip this feedback occasion and not perform the feedback.
2. For a serving cell where all HARQ process IDs are disabled, the Type-1 HARQ codebook does not reserve a HARQ bit corresponding to the serving cell.
3. A bitmap is used to indicate which possible PDSCH reception positions require the feedback from the PDSCH.
4. The maximum number of possible feedback situations that require the feedback is calculated, such as, '1 out of 4'. 4 bits are originally required, but there are only 4 possibilities for '1 out of 4', so only 2 bits are needed, thus reducing the reporting overhead.

In summary, some manufacturers advocate no enhancement of the HARQ codebook, which is mainly out of considerations such as the complexity of the UE and changes to the existing standards based on capabilities of terminals produced by each manufacturer. For example, Negative Acknowledgement (NACK) or Acknowledgement (ACK) is directly embed for the feedback-disabled HARQ processes, while feedback is not performed based on a check result of PDSCH. Some manufacturers advocate the enhancement of the HARQ codebook, which is mainly out of considerations such as the feedback overhead and the reduced uplink interference (e.g., reducing the frequency of feedback or reducing the size of the codebook itself).

Therefore, the terminals from different terminal manufacturers support different HARQ codebook configuration capabilities, and complex codebook construction methods will bring higher complexity. There is a problem that needs to be solved about how to make HARQ codebooks with different complexity suitable for the terminals supporting different HARQ codebook configuration capabilities.

In view of this, the embodiments of the disclosure provide a method for codebook feedback. In the method for codebook feedback, the terminal sends capability information indicating HARQ codebook configuration capability supported by the terminal when using a partial HARQ disabled mechanism. The network device configures HARQ codebook configuration information for the terminal based on the capability information. The terminal generates and feeds back a HARQ codebook based on the HARQ codebook configuration information configured by the network device, so that the terminal is caused to generate and feed back a HARQ codebook that matches the HARQ codebook configuration capability supported by the terminal itself. That is, it is achieved that the terminals that support different HARQ codebook configuration capabilities may use HARQ codebooks that adapt to their own complexity.

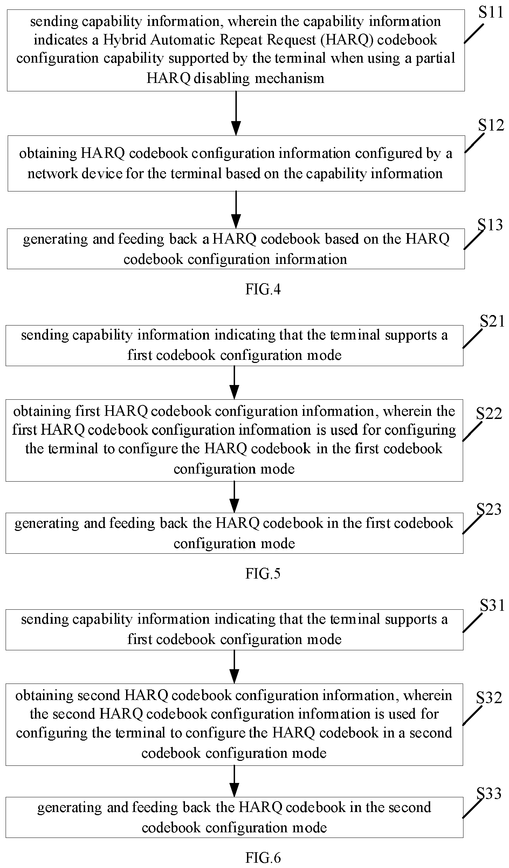

FIG. 4 is a flowchart illustrating a method for codebook feedback according to an example embodiment. As shown in FIG. 4, the method for codebook feedback is executed by a terminal and includes the following steps.

At S11, capability information is sent, and the capability information indicates HARQ codebook configuration capability supported by the terminal when using a partial HARQ disabled mechanism.

At S12, it is obtained HARQ codebook configuration information configured by the network device for the terminal based on the capability information sent by the terminal.

At S13, a HARQ codebook is generated and fed back based on the HARQ codebook configuration information.

In the embodiment of the disclosure, the HARQ codebook is one of a plurality of types of HARQ codebooks, such as Type-1 HARQ codebook, Type-2 HARQ codebook, and Type-3 HARQ codebook.

In this embodiment of the disclosure, the HARQ codebook configuration capability supported by the terminal when using a partial HARQ disabled mechanism may include: HARQ codebook configuration capability of enhancing the HARQ codebooks (such as Type-1 HARQ codebook, Type-2 HARQ codebook and Type-3 HARQ codebook) involved in the related art, or HARQ codebook configuration capability that does not perform the enhancement.

For convenience of description in the embodiments of the disclosure, a HARQ codebook configuration mode corresponding to the HARQ codebook configuration capability with enhancement is called a first codebook configuration mode. A HARQ codebook configuration mode corresponding to the HARQ codebook configuration capability without enhancement is called a second codebook configuration mode. The first codebook configuration mode may also be understood as an enhancement of the second codebook configuration mode.

There may be one or more codebook configuration modes included in the first codebook configuration mode in the embodiment of the disclosure, for example, one or more of the enhancement schemes for the Type-1 HARQ codebook in the related art. There may be one or more codebook configuration modes included in the second codebook configuration mode

In the embodiment of the disclosure, the terminal may send to the network device the capability information indicating the HARQ codebook configuration capability supported by the terminal, based on whether the supported codebook configuration mode is the first codebook configuration mode or the second codebook configuration mode.

The capability information indicating the HARQ codebook configuration capability supported by the terminal may be separately sent by the terminal to the network device.

In an implementation, when the terminal separately sends the capability information indicating the HARQ codebook configuration capability supported by the terminal to the network device, the terminal may design information dedicated to indicating the HARQ codebook configuration capability of the terminal for the HARQ codebook. The information dedicated to indicating the HARQ codebook configuration capability of the terminal for the HARQ codebook may be referred to as first capability information below.

In an example, it is assumed that the HARQ codebook is the Type-1 HARQ codebook, and the HARQ codebook configuration capability supported by the terminal is the enhanced Type-1 HARQ codebook. The first capability information sent by the terminal to the network device may be information dedicated to indicating the HARQ codebook configuration capability of the terminal for the Type-1 HARQ codebook.

In an example, in the NTN network, an information element (IE) including the first capability information reported by the terminal may be as follows:

```
NTN-r17 ::= SEQUENCE {

    ul-maximumHARQProcessNumber-r17        ENUMERATED {supported}    OPTIONAL,
    enhancedSemi-static-r17                ENUMERATED    {supported}  OPTIONAL.
```

On the other hand, the terminal may also send the capability information indicating the HARQ codebook configuration capability supported by the terminal to the network device together with other information. The other information may be understood as information different from information indicating the HARQ codebook configuration capability for the HARQ codebook. In an example, the other information may also be understood as other signaling that may carry capability information of the HARQ codebook configuration capability supported by the terminal. The capability information indicating the HARQ codebook configuration capability supported by the terminal, and the other information different from information indicating the HARQ codebook configuration capability for the HARQ codebook, may be carried in the same information and sent to the terminal. For example, the capability information indicating the HARQ codebook configuration capability supported by the terminal may be carried in other signaling. The following description takes the information carrying the capability information (that indicates the HARQ codebook configuration capability supported by the terminal) and other information as second capability information.

In the embodiment of the disclosure, when the second capability information is sent, an indication of the capability information of the HARQ codebook configuration capability supported by the terminal may be an explicit indication or an implicit indication. For example, the second capability information includes a bit that indicates different HARQ codebook configuration capabilities. The different HARQ codebook configuration capabilities are explicitly indicated by different values of the bit. For another example, when the second capability information does not include the bit that indicates different HARQ codebook configuration capabilities, it may be understood as an implicit indication that the terminal supports the HARQ codebook configuration capability without enhancement.

In an example, it is assumed that the HARQ codebook is the Type-1 HARQ codebook, and the HARQ codebook configuration capability supported by the terminal is the enhanced Type-1 HARQ codebook. The second capability information sent by the terminal to the network device may include information related to the enhanced Type-1 HARQ codebook, and information related to other HARQ codebooks such as the Type-2 HARQ codebook, and Type-3 HARQ codebook.

In an example, in the NTN network, an information element including the second capability information reported by the terminal may be as follows:

NTN-r17::＝SEQUENCE{

    ul-maximumHARQProcessNumber-r17        ENUMERATED{supported}        OPTIONAL,

    enhancedHARQcodebook-r17        ENUMERATED{supported}        OPTIONAL.

In the embodiment of the disclosure, the terminal determines the first capability information or the second capability information sent to the network device, based on Radio Resource Control (RRC) configuration information configured by the network device for the terminal. The RRC configuration information may be configured by the network device based on the capabilities of the terminals, interference conditions/load conditions, etc.

In the embodiment of the disclosure, the terminal sends to the network device the capability information indicating the HARQ codebook configuration capability supported by the terminal, so that the network device may configure the HARQ codebook configuration information for the terminal based on the capability information.

In the embodiment of the disclosure, the HARQ codebook configuration information configured by the network device for the terminal may include HARQ codebook configuration information corresponding to the first codebook configuration mode, which is hereinafter referred to as the first HARQ codebook configuration information. The HARQ codebook configuration information configured by the network device for the terminal may include HARQ codebook configuration information corresponding to the second codebook configuration mode, which is hereinafter referred to as the second HARQ codebook configuration information.

In the method for codebook feedback according to the embodiments of the disclosure, the network device may configure based on the HARQ codebook configuration capability supported by the terminal, the first HARQ codebook configuration information or the second HARQ codebook configuration information for the terminal, and the terminal configures the HARQ codebook in a codebook configuration mode corresponding to the configured codebook configuration information.

In an implementation, when the capability information sent by the terminal indicates that the terminal supports the first codebook configuration mode, the HARQ codebook configuration information includes the first HARQ codebook configuration information, and the first HARQ codebook configuration information is used for configuring the terminal to configure the HARQ codebook in the first codebook configuration mode.

FIG. 5 is a flowchart illustrating a method for codebook feedback according to an example embodiment. As shown in FIG. 5, the method for codebook feedback is executed by a terminal and includes the following steps.

At S21, capability information is sent, in which the capability information indicates the terminal supports the first codebook configuration code.

At S22, first HARQ codebook configuration information is obtained. The first HARQ codebook configuration information is used for configuring the terminal to configure the HARQ codebook in the first codebook configuration mode.

At S23, the HARQ codebook is generated and fed back in the first codebook configuration mode.

In the embodiment of the disclosure, if the terminal has the capability to support the first codebook configuration mode, the terminal may send to the network device the capability information indicating that the terminal supports the first codebook configuration mode. The network device configures the first HARQ codebook configuration information for the terminal based on the capability information of supporting the first codebook configuration mode, so as to cause the terminal to configure the HARQ codebook in the first codebook configuration mode.

In an example, the terminal supports a codebook configuration mode that reduces a codebook size, and the network device may configure the HARQ codebook configuration information for the terminal to construct a codebook with a smaller codebook size. Alternatively, if the terminal supports a codebook configuration mode that reduces a HARQ codebook feedback frequency, the network device may configure the terminal to feed back the HARQ codebook in the above mode of skipping a certain HARQ codebook feedback.

In the embodiment of the disclosure, if the terminal has the capability to support the first codebook configuration mode, the terminal may send to the network device the capability information indicating that the terminal supports the first codebook configuration mode. Since the first codebook configuration mode is an enhancement of the second codebook configuration mode, when the terminal supports the first codebook configuration mode, it also supports the second codebook configuration mode. Therefore, the network device may configure the second HARQ codebook configuration information for the terminal based on the capability information of supporting the first codebook configuration mode, so as to cause the terminal to configure the HARQ codebook by the second codebook configuration mode.

In another embodiment, the capability information sent by the terminal indicates that the terminal supports the first codebook configuration mode, the HARQ codebook configuration information includes second HARQ codebook configuration information, and the second HARQ codebook configuration information is used for configuring the terminal to configure the HARQ codebook by the second codebook configuration mode.

FIG. 6 is a flowchart illustrating a method for codebook feedback according to an example embodiment. As shown in FIG. 6, the method for codebook feedback is executed by a terminal and includes the following steps.

At S31, capability information indicating that the terminal supports the first codebook configuration mode is sent.

At S32, second HARQ codebook configuration information is obtained. The second HARQ codebook configuration information is used for configuring the terminal to configure the HARQ codebook by the second codebook configuration mode.

At S33, the second codebook configuration mode is used to generate and feed back the HARQ codebook.

In the embodiment of the disclosure, if the terminal has the capability to support the first codebook configuration mode, it may be implemented based on the implementations of FIG. 5 and FIG. 6, i.e., using the first codebook configuration mode to generate and feed back a HARQ codebook, or using the second codebook configuration mode to generate and feed back a HARQ codebook.

In yet another implementation, in the embodiment of the disclosure, if the terminal has the capability to support the second codebook configuration mode, the capability information indicating that the terminal supports the second codebook configuration mode is sent. The network device configures the second HARQ codebook configuration information for the terminal based on the capability information of supporting the second codebook configuration mode. The second HARQ codebook configuration information is used for configuring the terminal to configure the HARQ codebook by the second codebook configuration mode. The terminal obtains the second HARQ codebook configuration information, generates and feeds back the HARQ codebook by the second codebook configuration mode

In this embodiment of the disclosure, the network device may configure HARQ codebook configuration information for the terminal through RRC information. In an example, the terminal may obtain the first HARQ codebook configuration information through RRC information. The terminal may also obtain the second HARQ codebook configuration information through RRC information.

In an example, assuming that the HARQ codebook is the Type-1 HARQ codebook, the example of configuring the first HARQ codebook configuration information (i.e., enhanced HARQ codebook) through RRC information is as follows:

```
PhysicalCellGroupConfig ::=          SEQUENCE {

    harq-ACK-SpatialBundlingPUCCH                                    ENUMERATED     {true}

OPTIONAL,    -- Need S

    ...

    pdsch-HARQ-ACK-Codebook              ENUMERATED {semiStatic, dynamic},

    pdsch-HARQ-ACK-Codebook-r16              ENUMERATED {enhancedDynamic}

OPTIONAL,    -- Need R

    pdsch-HARQ-ACK-Codebook-r17              ENUMERATED {enhancedSemi-static}

OPTIONAL,    -- Need R
```

The method for codebook feedback according to the embodiments of the disclosure is suitable for one of a plurality of types of HARQ codebooks, such as Type-1 HARQ codebook, Type-2 HARQ codebook, and Type-3 HARQ codebook. For example, it may be a feedback for the Type-1 HARQ codebook or a feedback for the Type-3 HARQ codebook.

In an implementation, the HARQ codebook is a Type-1 HARQ codebook.

When the Type-1 HARQ codebook is transmitted on a Physical Uplink Shared Channel (PUSCH), there may be a corresponding Downlink assignment index (DAI) indication to help perform rate matching. In the related art, when a value of the DAI is 0, it indicates that there is no need to feed back the HARQ codebook on the PUSCH. When the value of the DAI is 1, it indicates that there is a need to feed back the HARQ codebook on the PUSCH.

In an implementation, in the method for codebook feedback according to the embodiment of the disclosure, the HARQ codebook is a Type-1 HARQ codebook, and the terminal receives DAI indication information.

In the embodiment of the disclosure, for the Type-1 HARQ codebook, an enhanced method for feeding back the Type-1 HARQ codebook is an enhanced design of the Type-1 HARQ codebook that skips a certain feedback, which is also called downlink control information (DCI) miss detection with the enabled-HARQ process. That is, the HARQ codebook configuration information received by the terminal is the first HARQ codebook configuration information, and the first HARQ codebook configuration information indicates that feedback is not performed when a HARQ process scheduling signaling that requires information to be fed back is not received.

Based on the above example, for the Type-1 HARQ codebook, there may be an enhanced design for the Type-1 HARQ codebook that skips a certain feedback. It is necessary to solve a conflict problem between the DCI miss detection including the enabled-HARQ process and a value of DAI being equal to 1 in the scheduled PUSCH including the type-1 HARQ codebook.

In the embodiment of the disclosure, in order to solve the above conflict problem, when it occurs that in the enhanced design for the Type-1 HARQ codebook that skips the certain feedback, it is necessary to solve the conflict problem between the DCI miss detection including the enabled-HARQ process and the value of DAI being equal to 1 in the scheduled PUSCH including the type-1 HARQ codebook, the terminal still generates and feeds back the HARQ codebook based on the DAI indication information.

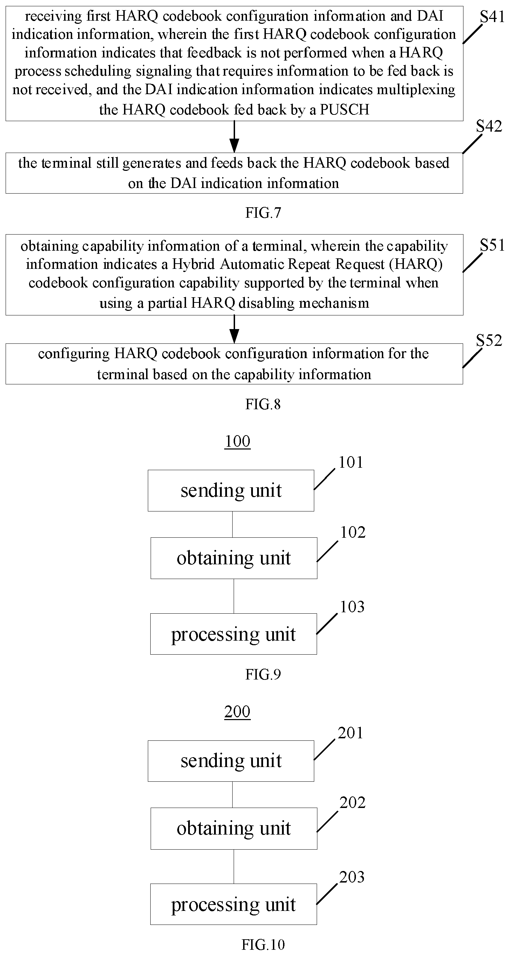

FIG. 7 is a flowchart illustrating a method for codebook feedback according to an example embodiment. As shown in FIG. 7, the method for codebook feedback is executed by a terminal and includes the following steps.

At S41, first HARQ codebook configuration information is received, and DAI indication information is received.

The first HARQ codebook configuration information indicates that feedback is not performed when a HARQ process scheduling signaling that requires information to be fed back is not received. The DAI indication information indicates multiplexing the HARQ codebook fed back by the PUSCH.

At S42, the terminal still generates and feeds back the HARQ codebook based on the DAI indication information.

In an example of the disclosure, the terminal receives DCI with $V_{\text{T-DAI}}^{\text{UL}} = 1$ while the terminal does not receive any PDSCH scheduled by HARQ-ACK feedback enabled HARQ process. The terminal generates the HARQ codebook and multiplexes HARQ-ACK information in a PUSCH transmission.

Based on the above embodiments, the embodiments of the disclosure also provide a method for codebook feedback, executed by a network device.

FIG. 8 is a flowchart illustrating a method for codebook feedback according to an example embodiment. As shown in FIG. 8, the method for codebook feedback is executed by a terminal and includes the following steps.

At S51, capability information of the terminal is obtained. The capability information indicates HARQ codebook configuration capability supported by the terminal when using a partial HARQ disabled mechanism.

In the embodiment of the disclosure, the HARQ codebook is one of a plurality of types of HARQ codebooks, such as Type-1 HARQ codebook, Type-2 HARQ codebook, and Type-3 HARQ codebook.

In the embodiment of the disclosure, the HARQ codebook configuration capability supported by the terminal when using the partial HARQ disabled mechanism may include HARQ codebooks such as the Type-1 HARQ codebook, the Type-2 HARQ codebook and the Type-3 HARQ codebook involved in the related art. The codebook has enhanced HARQ codebook configuration capabilities, or HARQ codebook configuration capability that does not perform the enhancement.

At S52, HARQ codebook configuration information is configured for the terminal based on the capability information.

In an implementation, the capability information of the terminal indicates that the terminal supports a first codebook configuration mode, the network device configures first HARQ codebook configuration information for the terminal, and the first HARQ codebook configuration information is used for configuring the terminal to configure the HARQ codebook in the first codebook configuration mode.

The network device may configure the first HARQ codebook configuration information for the terminal through RRC configuration information.

In another implementation, the capability information of the terminal indicates that the terminal supports the first codebook configuration mode, and second HARQ codebook configuration information is configured for the terminal. The second HARQ codebook configuration information is used for configuring the terminal to configure the HARQ codebook in a second codebook configuration mode. The first codebook configuration mode is an enhancement of the second codebook configuration mode.

The network device may configure the second HARQ codebook configuration information for the terminal through RRC configuration information.

In yet another implementation, the capability information of the terminal indicates that the terminal supports the second codebook configuration mode, and the second HARQ codebook configuration information is configured for the terminal. The second HARQ codebook configuration information is used for configuring the terminal to configure the HARQ codebook by the second codebook configuration mode. The first codebook configuration mode is an enhancement of the second codebook configuration mode.

The network device may configure the second HARQ codebook configuration information for the terminal through the RRC configuration information.

In the embodiment of the disclosure, the network device obtains the capability information of the terminal. On the one hand, the network device may obtain first capability information. The first capability information is information dedicated to indicating the HARQ codebook configuration capability of the terminal for the HARQ codebook. On the other hand, the network device may obtain second capability information, which includes HARQ codebook configuration capability information for the HARQ codebook, and other information different from the HARQ codebook configuration capability information for the HARQ codebook.

In an implementation, the HARQ codebook is a semi-static HARQ codebook. The network device may also send DAI indication information to the terminal, and receive a HARQ codebook generated and fed back by the terminal based on the DAI indication information after the terminal receives the first HARQ codebook configuration information. The first HARQ codebook configuration information indicates that feedback is not performed when a HARQ process scheduling signaling that requires information to be fed back is not received.

In the method for codebook feedback according to the embodiments of the disclosure, the network device configures HARQ codebook configuration information for the terminal based on the capability information obtained from the terminal, so that the terminal may generate and feed back a HARQ codebook that matches the HARQ codebook configuration capability supported by the terminal itself.

It may be understood that the method for codebook feedback according to the embodiments of the disclosure is also applicable to a process of interactions between a terminal and a network device to implement the codebook feedback. For the process of interaction between the terminal and the network device to implement the codebook feedback, please refer to the relevant descriptions of the above embodiments for the method for codebook feedback at the terminal and at the network device.

It should be noted that those skilled in the art may understand that the various implementations/embodiments mentioned above in the embodiments of the disclosure may be used in conjunction with the foregoing embodiments or may be used independently. Whether used alone or in conjunction with the foregoing embodiments, the implementation principles are similar. In the implementations of the disclosure, some embodiments are described in a way that they are implemented together. Of course, those skilled in the art may understand that such illustrations do not limit the embodiments of the disclosure.

Based on the same concept, the embodiments of the disclosure also provide an apparatus for codebook feedback.

It may be understood that, in order to implement the above functions, the apparatus for codebook feedback according to the embodiments of the disclosure includes hardware structures and/or software modules corresponding to each function. Combined with the units and algorithm steps of each example disclosed in the embodiments of the disclosure, the embodiments of the disclosure may be implemented in the form of hardware or a combination of hardware and computer software. Whether the functions are performed by hardware or computer software driving the hardware, depends on a specific application and design constraints of the technical solution. Those skilled in the art may use different methods to implement the described functions for each specific application, but such implementation should not be considered to go beyond the scope of the technical solutions of the embodiments of the disclosure.

FIG. 9 is a block diagram illustrating an apparatus for codebook feedback according to an example embodiment. Referring to FIG. 9, the apparatus 100 for codebook feedback includes a sending unit 101, an obtaining unit 102 and a processing unit 103.

The sending unit 101 is configured to send capability information. The capability information indicates a HARQ codebook configuration capability supported by the terminal when using a partial HARQ disabled mechanism. The obtaining unit 102 is configured to obtain HARQ codebook configuration information configured by a network device for the terminal based on the capability information. The processing unit 103 is configured to generate and feed back a HARQ codebook based on the HARQ codebook configuration information.

In an implementation, the capability information indicates that the terminal supports a first codebook configuration mode, the HARQ codebook configuration information includes first HARQ codebook configuration information, and the first HARQ codebook configuration information is used for configuring the terminal to configure the HARQ codebook in the first codebook configuration mode.

In an implementation, the capability information indicates that the terminal supports a first codebook configuration mode, the HARQ codebook configuration information includes second HARQ codebook configuration information, and the second HARQ codebook configuration information is used for configuring the terminal to configure the HARQ codebook in a second codebook configuration mode. The first codebook configuration mode is an enhancement of the second codebook configuration mode.

In an implementation, the HARQ codebook is one of a plurality of types of HARQ codebooks.

In an implementation, the sending unit 101 sends first capability information. The first capability information is information dedicated to indicating the HARQ codebook configuration capability of the terminal for the HARQ codebook.

In an implementation, the sending unit 101 sends second capability information. The second capability information includes information indicating the HARQ codebook configuration capability of the terminal for the HARQ codebook, and other information different from the information indicating the HARQ codebook configuration capability for the HARQ codebook.

In an implementation, the HARQ codebook is a semi-static HARQ codebook.

In an implementation, the obtaining unit 102 is further configured to receive DAI indication information.

In an implementation, in response to the HARQ codebook configuration information being the first HARQ codebook configuration information, and the first HARQ codebook configuration information indicating that feedback is not performed when a HARQ process scheduling signaling that requires information to be fed back is not received, the processing unit 103 still generates and feeds back the HARQ codebook based on the DAI indication information.

FIG. 10 is a block diagram illustrating an apparatus for codebook feedback according to an example embodiment. Referring to FIG. 10, the apparatus 200 for codebook feedback includes an obtaining unit 201 and a processing unit 202.

The obtaining unit 201 is configured to obtain capability information of a terminal. The capability information indicates a HARQ codebook configuration capability supported by the terminal when using a partial HARQ disabled mechanism. The processing unit 202 configures HARQ codebook configuration information for the terminal based on the capability information.

In an implementation, in response to the capability information indicating that the terminal supports the first codebook configuration mode, the processing unit 202 configures first HARQ codebook configuration information for the terminal, in which the first HARQ codebook configuration information is used for configuring the terminal to configure the HARQ codebook in the first codebook configuration mode.

In an implementation, in response to the capability information indicating that the terminal supports the first codebook configuration mode, the processing unit 202 configures second HARQ codebook configuration information for the terminal, in which the second HARQ codebook configuration information is used for configuring the terminal to configure the HARQ codebook in a second codebook configuration mode. The first codebook configuration mode is an enhancement of the second codebook configuration mode.

In an implementation, the HARQ codebook is one of a plurality of types of HARQ codebooks.

In an implementation, the obtaining unit 201 obtains first capability information, in which the first capability information is information dedicated to indicating the HARQ codebook configuration capability of the terminal for the HARQ codebook.

In an implementation, the obtaining unit 201 obtains second capability information, in which the second capability information includes information indicating the HARQ codebook configuration capability for the HARQ codebook, and other information different from the information indicating the HARQ codebook configuration capability for the HARQ codebook.

In an implementation, the HARQ codebook is a semi-static HARQ codebook.

In an implementation, the apparatus 200 for codebook feedback further includes a sending unit 203, and the sending unit 203 is configured to send DAI indication information. The obtaining unit is also configured to receive the HARQ codebook generated and fed back based on the DAI indication information by the terminal after receiving the first HARQ codebook configuration information, in which the first HARQ codebook configuration information indicates that feedback is not performed when a HARQ process scheduling signaling that requires information to be fed back is not received

Regarding the apparatus in the above embodiments, the specific manner in which each module performs operations has been described in detail in the embodiments related to the method, which will not be described in detail here.

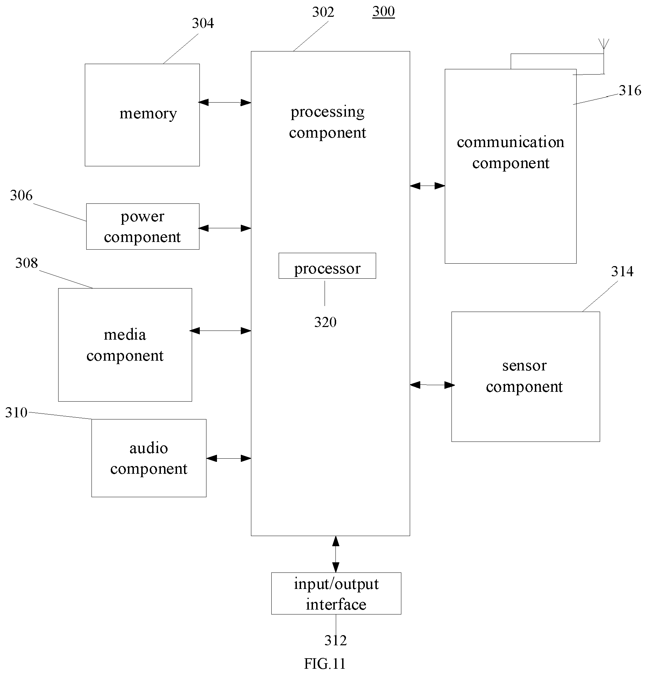

FIG. 11 is a block diagram of a device for codebook feedback according to an example embodiment. For example, the device 300 may be provided as a terminal related to the above embodiments, which may be, for example, a mobile phone, a computer, a digital broadcast terminal, a messaging device, a game console, a tablet device, a medical device, a fitness device, a personal digital assistant, or the like.

Referring to FIG. 11, the device 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls overall operations of the device 300, such as operations associated with display, phone calls, data communications, camera operations, and recording operations. The processing component 302 may include one or more processors 320 to execute instructions to complete all or part of the steps of the above method. Additionally, the processing component 302 may include one or more modules that facilitate interaction between the processing component 302 and other components. For example, the processing component 302 may include a multimedia module to facilitate interaction between the multimedia component 308 and the processing component 302.

The memory 304 is configured to store various types of data to support operations at the device 300. Examples of such data include instructions for any application program or any method operating on the device 300, contact data, phonebook data, messages, pictures, videos, etc. The memory 304 may be implemented by any type of volatile or non-volatile storage device, or their combination, such as a Static Random Access Memory (SRAM), an Electrically Erasable Programmable Read-Only Memory (EEPROM), an Erasable Programmable Read-Only Memory (EEPROM), a Programmable Read-Only Memory (EPROM), a Programmable Read-Only Memory (PROM), a Read-Only Memory (ROM), a magnetic memory, a flash memory, a magnetic or an optical disk.

The power component 306 provides power to the various components of device 300. The power component 306 may include a power management system, one or more power supplies, and other components associated with generating, managing, and distributing powers to the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense a boundary of a touch or slide action, but also detect a duration and a pressure associated with the touch or slide action. In some embodiments, the multimedia component 308 includes a front-facing camera and/or a rear-facing camera. When the device 300 is in an operating mode, such as a shooting mode or a video mode, the front camera and/or the rear camera may receive external multimedia data. Each of the front-facing camera and the rear-facing camera may be a fixed optical lens system or have a focal length and optical zoom capabilities.

The audio component 310 is configured to output and/or input audio signals. For example, the audio component 310 includes a microphone (MIC) configured to receive external audio signals when the device 300 is in an operating mode, such as a call mode, a recording mode, and a speech recognition mode. The received audio signals may be further stored in the memory 304 or sent via the communication component 316. In some embodiments, the audio component 310 also includes a speaker for outputting audio signals.

The I/O interface 312 provides an interface between the processing component 302 and a peripheral interface module, which may be a keyboard, a click wheel, a button, etc. These buttons may include, but are not limited to: a home button, volume buttons, a start button, and a lock button.

The sensor component 314 includes one or more sensors for providing various aspects of status assessment for the device 300. For example, the sensor component 314 may detect an on/off state of the device 300, a relative positioning of components such as a display and a keypad of the device 300, and the sensor component 314 may also detect a position change of the device 300 or a component of the device 300, a presence or absence of a user contact with the device 300, an orientation or acceleration/deceleration of the device 300 and a temperature change of the device 300. The sensor component 314 may include a proximity sensor configured to detect the presence of nearby objects without any physical contact. The sensor component 314 may also include a light sensor, such as a Complementary Metal-Oxide-Semiconductor (CMOS) or Charge Coupled Device (CCD) image sensor, for use in imaging applications. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 may access a wireless network based on a communication standard, such as WiFi, 2G or 3G, or their combination. In an example embodiment, the communication component 316 receives broadcast signals or broadcast related information from an external broadcast management system via a broadcast channel. In an example embodiment, the communication component 316 also includes a near field communication (NFC) module to facilitate short-range communications. For example, the NFC module can be implemented based on Radio Frequency Identification (RFID) technology, Infrared Data Association (IrDA) technology, Ultra-Wideband (UWB) technology, Bluetooth (BT) technology and other technologies.

In an example embodiment, the device 300 may be implemented by one or more Application Specific Integrated Circuits (ASICs), Digital Signal Processors (DSPs), Digital Signal Processing Devices (DSPDs), Programmable Logic Devices (PLDs), a Field Programmable Gate Array (FPGA), a controller, a microcontroller, a microprocessor or other electronic components, for executing the above method.

In an example embodiment, a non-transitory computer-readable storage medium including instructions is also provided, such as the memory 304 including instructions, which may be executed by the processor 320 of the device 300 to complete the above method. For example, the non-transitory computer-readable storage medium may be a ROM, a random access memory (RAM), a CD-ROM, a magnetic tape, a floppy disk, an optical a data storage device, etc.

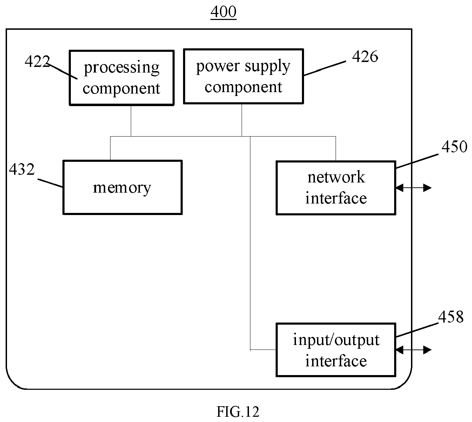

FIG. 12 is a block diagram illustrating a device for codebook feedback according to an example embodiment. For example, the device 400 for codebook feedback may be provided as a network device. Referring to FIG. 12, the device 400 includes a processing component 422, which further includes one or more processors, and memory resources represented by a memory 432 for storing instructions, such as application programs, executable by the processing component 422. The application program stored in the memory 432 may include one or more modules, each of which corresponds to a set of instructions. Furthermore, the processing component 422 is configured to execute instructions to perform the above methods.

The device 400 may also include a power supply component 426 configured to perform power management of device 400, a wired or wireless network interface 450 configured to connect the device 400 to a network, and an input-output (I/O) interface 458. The device 400 may operate based on an operating system stored in the memory 432, such as Windows Server™, Mac OS X™, Unix™, Linux™, FreeBSD™ or the like.

In an example embodiment, a non-transitory computer-readable storage medium including instructions is also provided, such as the memory 432 including instructions executable by the processing component 422 of the device 400 to complete the above method. For example, the non-transitory computer-readable storage medium may be a ROM, a random access memory (RAM), a CD-ROM, a magnetic tape, a floppy disk, an optical data storage device, etc.

It may be further understood that "a plurality of' in the disclosure refers to two or more than two, and other quantifiers are similar. "And/or" describes a relationship between related objects, indicating that there may be three relationships. For example, A and/or B may mean: A exists alone, A and B exist simultaneously, and B exists alone. The character "/" generally indicates that the related objects are in an "or" relationship. The singular forms "a", "an" and "the" are intended to include the plural forms as well, unless the context clearly indicates otherwise.

It is further understood that the terms "first", "second", etc. are used to describe various information, but such information should not be limited to these terms. These terms are only used to distinguish information of the same type from each other and do not imply a specific order or importance. In fact, the expressions such as "first" and "second" may be used interchangeably. For example, without departing from the scope of the disclosure, first information may also be called second information, and similarly, second information may also be called first information.

It will be further understood that although the operations are described in a specific order in the drawings in the embodiments of the disclosure, it should not be understood as requiring that these operations are performed in a specific order as shown or in a serial order, or all the operations shown are performed to obtain a desired result. In certain circumstances, multitasking and parallel processing may be advantageous.

Other embodiments of the disclosure may be readily apparent to those skilled in the art from consideration of the specification and practice of the invention disclosed herein. The invention is intended to cover any variations, uses, or adaptations of the disclosure that follow the general principles of the disclosure and include common knowledge or conventional technical means in the technical field that are not disclosed herein. It is intended that the specification and examples be considered as exemplary only, with a true scope and spirit of the disclosure being indicated by the following claims.

It is to be understood that the disclosure is not limited to the precise structures described above and illustrated in the accompanying drawings, various modifications and changes may be made without departing from the scope of the disclosure. The scope of the disclosure is limited only by the appended claims.

**Claims**

1. A method for codebook feedback, applied to a terminal, the method comprising:

    sending capability information, wherein the capability information indicates a Hybrid Automatic Repeat Request (HARQ) codebook configuration capability supported by the terminal when using a partial HARQ disabled mechanism;
    obtaining HARQ codebook configuration information configured by a network device for the terminal based on the capability information; and
    generating and feeding back a HARQ codebook based on the HARQ codebook configuration information.

2. The method according to claim 1, in response to the capability information indicating that the terminal supports a first codebook configuration mode, the HARQ codebook configuration information comprises first HARQ codebook configuration information, and the first HARQ codebook configuration information is used for configuring the terminal to configure the HARQ codebook in the first codebook configuration mode.

3. The method according to claim 2, in response to the capability information indicating that the terminal supports the first codebook configuration mode, the HARQ codebook configuration information comprises second HARQ codebook configuration information, and the second HARQ codebook configuration information is used for configuring the terminal to configure the HARQ codebook in a second codebook configuration mode;
    the first codebook configuration mode is an enhancement of the second codebook configuration mode.

4. The method according to any one of claims 1 to 3, wherein the HARQ codebook is one of a plurality of types of HARQ codebooks.

5. The method according to claim 4, wherein sending the capability information comprises:
sending first capability information, wherein the first capability information is information dedicated to indicating the HARQ codebook configuration capability of the terminal for the HARQ codebook.

6. The method according to claim 4, wherein sending the capability information comprises:
sending second capability information, wherein the second capability information comprises information indicating the HARQ codebook configuration capability of the terminal for the HARQ codebook, and other information different from the information indicating the HARQ codebook configuration capability for the HARQ codebook.

7. The method according to any one of claims 1 to 6, wherein the HARQ codebook is a semi-static HARQ codebook.

8. The method according to claim 7, further comprising:
receiving Downlink Assignment Index (DAI) indication information.

9. The method according to claim 8, further comprising:
in response to the HARQ codebook configuration information being the first HARQ codebook configuration information, and the first HARQ codebook configuration information indicating that feedback is not performed when a HARQ process scheduling signaling that requires information to be fed back is not received, the terminal still generates and feeds back the HARQ codebook based on the DAI indication information.

10. A method for codebook feedback, applied to a network device, the method comprising:

obtaining capability information of a terminal, wherein the capability information indicates a Hybrid Automatic Repeat Request (HARQ) codebook configuration capability supported by the terminal when using a partial HARQ disabled mechanism; and
configuring HARQ codebook configuration information for the terminal based on the capability information.

11. The method according to claim 10, wherein configuring the HARQ codebook configuration information for the terminal based on the capability information comprises:
in response to the capability information indicating that the terminal supports a first codebook configuration mode, configuring first HARQ codebook configuration information for the terminal, wherein the first HARQ codebook configuration information is used for configuring the terminal to configure a HARQ codebook in the first codebook configuration mode.

12. The method according to claim 10, wherein configuring the HARQ codebook configuration information for the terminal based on the capability information comprises:

in response to the capability information indicating that the terminal supports a first codebook configuration mode, configuring second HARQ codebook configuration information for the terminal, wherein the second HARQ codebook configuration information is used for configuring the terminal to configure a HARQ codebook in a second codebook configuration mode;
the first codebook configuration mode is an enhancement of the second codebook configuration mode.

13. The method according to any one of claims 10 to 12, wherein the HARQ codebook is one of a plurality of types of HARQ codebooks.

14. The method according to claim 13, wherein obtaining the capability information of the terminal comprises:
obtaining first capability information, wherein the first capability information is information dedicated to indicating the HARQ codebook configuration capability of the terminal for the HARQ codebook.

15. The method according to claim 13, wherein obtaining the capability information of the terminal comprises:
obtaining second capability information, wherein the second capability information comprises information indicating the HARQ codebook configuration capability for the HARQ codebook, and other information different from the information indicating the HARQ codebook configuration capability for the HARQ codebook.

**16.** The method according to any one of claims 10 to 15, wherein the HARQ codebook is a semi-static HARQ codebook.

**17.** The method according to claim 16, further comprising:

sending Downlink Assignment Index (DAI) indication information;
receiving the HARQ codebook generated and fed back based on the DAI indication information by the terminal after receiving the first HARQ codebook configuration information, wherein the first HARQ codebook configuration information indicates that feedback is not performed when a HARQ process scheduling signaling that requires information to be fed back is not received.

**18.** An apparatus for codebook feedback, comprising:

a sending unit, configured to send capability information, wherein the capability information indicates a Hybrid Automatic Repeat Request (HARQ) codebook configuration capability supported by the terminal when using a partial HARQ disabled mechanism;
an obtaining unit, configured to obtain HARQ codebook configuration information configured by a network device for the terminal based on the capability information; and
a processing unit, configured to generate and feed back a HARQ codebook based on the HARQ codebook configuration information.

**19.** An apparatus for codebook feedback, applied to a network device, the apparatus comprising:

an obtaining unit, configured to obtain capability information of a terminal, where the capability information indicates a Hybrid Automatic Repeat Request (HARQ) codebook configuration capability supported by the terminal when using a partial HARQ disabled mechanism; and
a processing unit, configuring HARQ codebook configuration information for the terminal based on the capability information.

**20.** A device for codebook feedback, comprising:

a processor; and
a memory storing instructions executable by the processor;
wherein the processor is configured to execute the method for codebook feedback according to any one of claims 1 to 9.

**21.** A device for codebook feedback, comprising:

a processor; and
a memory storing instructions executable by the processor;
wherein the processor is configured to execute the method for codebook feedback according to any one of claims 10 to 17.

**22.** A storage medium having instructions stored thereon, wherein when the instructions are executed by a processor of a terminal, the terminal is caused to execute the method for codebook feedback according to any one of claims 1 to 9.

**23.** A storage medium having instructions stored thereon, wherein when the instructions are executed by a processor of a terminal, the terminal is caused to execute the method for codebook feedback according to any one of claims 10 to 17.

FIG. 1

FIG.2

FIG.3

sending capability information, wherein the capability information indicates a Hybrid Automatic Repeat Request (HARQ) codebook configuration capability supported by the terminal when using a partial HARQ disabling mechanism

S11

obtaining HARQ codebook configuration information configured by a network device for the terminal based on the capability information

S12

generating and feeding back a HARQ codebook based on the HARQ codebook configuration information

S13

FIG.4

sending capability information indicating that the terminal supports a first codebook configuration mode

S21

obtaining first HARQ codebook configuration information, wherein the first HARQ codebook configuration information is used for configuring the terminal to configure the HARQ codebook in the first codebook configuration mode

S22

generating and feeding back the HARQ codebook in the first codebook configuration mode

S23

FIG.5

sending capability information indicating that the terminal supports a first codebook configuration mode

S31

obtaining second HARQ codebook configuration information, wherein the second HARQ codebook configuration information is used for configuring the terminal to configure the HARQ codebook in a second codebook configuration mode

S32

generating and feeding back the HARQ codebook in the second codebook configuration mode

S33

FIG.6

receiving first HARQ codebook configuration information and DAI indication information, wherein the first HARQ codebook configuration information indicates that feedback is not performed when a HARQ process scheduling signaling that requires information to be fed back is not received, and the DAI indication information indicates multiplexing the HARQ codebook fed back by a PUSCH — S41

the terminal still generates and feeds back the HARQ codebook based on the DAI indication information — S42

FIG.7

obtaining capability information of a terminal, wherein the capability information indicates a Hybrid Automatic Repeat Request (HARQ) codebook configuration capability supported by the terminal when using a partial HARQ disabling mechanism — S51

configuring HARQ codebook configuration information for the terminal based on the capability information — S52

FIG.8

<u>100</u>

sending unit — 101

obtaining unit — 102

processing unit — 103

FIG.9

<u>200</u>

sending unit — 201

obtaining unit — 202

processing unit — 203

FIG.10

FIG.11

400

422 processing component

power supply component 426

432 memory

network interface 450

input/output interface 458

FIG.12

## INTERNATIONAL SEARCH REPORT

| International application No. |
|---|
| **PCT/CN2021/117814** |

### A. CLASSIFICATION OF SUBJECT MATTER

H04W 24/02(2009.01)i; H04L 1/18(2006.01)i

According to International Patent Classification (IPC) or to both national classification and IPC

### B. FIELDS SEARCHED

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 混合自动重传请求, 混合自动重复请求, 码本, 反馈, 支持, 方式, 能力, 类型, 配置, 生成, 发送, 通知, 指示, 传输, 增强, 下行分配索引, HARQ, codebook, feedback, support, mode, capability, type, configure, notify, indicate, enhance, DAI

### C. DOCUMENTS CONSIDERED TO BE RELEVANT

| Category* | Citation of document, with indication, where appropriate, of the relevant passages | Relevant to claim No. |
|---|---|---|
| X | CN 111585713 A (HUAWEI TECHNOLOGIES CO., LTD.) 25 August 2020 (2020-08-25) description, paragraphs [0423]-[0505] | 1-23 |
| A | CN 108574591 A (CHINA MOBILE COMMUNICATION LTD., RESEARCH INSTITUTE et al.) 25 September 2018 (2018-09-25) entire document | 1-23 |
| A | CN 112788590 A (DATANG MOBILE COMMUNICATIONS EQUIPMENT CO., LTD.) 11 May 2021 (2021-05-11) entire document | 1-23 |
| A | US 2021258102 A1 (QUALCOMM INC.) 19 August 2021 (2021-08-19) entire document | 1-23 |
| A | VIVO. "Discussion on HARQ Enhancements for NR-NTN" *3GPP TSG RAN WG1 #106-e, R1-2106593*, 07 August 2021 (2021-08-07), entire document | 1-23 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 March 2022** | **02 April 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/117814**

| Patent document cited in search report | | | Publication date (day/month/year) | Patent family member(s) | | | Publication date (day/month/year) |
|---|---|---|---|---|---|---|---|
| CN | 111585713 | A | 25 August 2020 | WO | 2020164474 | A1 | 20 August 2020 |
| | | | | CN | 111585713 | B | 26 October 2021 |
| | | | | EP | 3917050 | A1 | 01 December 2021 |
| | | | | US | 2021376961 | A1 | 02 December 2021 |
| CN | 108574591 | A | 25 September 2018 | CN | 108574591 | B | 17 April 2020 |
| CN | 112788590 | A | 11 May 2021 | | None | | |
| US | 2021258102 | A1 | 19 August 2021 | WO | 2021167968 | A1 | 26 August 2021 |

Form PCT/ISA/210 (patent family annex) (January 2015)